(19) Europäisches Patentamt
European Patent Office
Office européen des brevets

(11) **EP 3 294 792 B1**

(12) **EUROPÄISCHE PATENTSCHRIFT**

(45) Veröffentlichungstag und Bekanntmachung des Hinweises auf die Patenterteilung:
16.10.2019 Patentblatt 2019/42

(21) Anmeldenummer: **16724330.2**

(22) Anmeldetag: **10.05.2016**

(51) Int Cl.:
*C08G 69/14* (2006.01)     *C08J 5/04* (2006.01)
*C08G 69/18* (2006.01)     *C08G 69/28* (2006.01)
*C08L 77/02* (2006.01)

(86) Internationale Anmeldenummer:
**PCT/EP2016/060457**

(87) Internationale Veröffentlichungsnummer:
**WO 2016/180830 (17.11.2016 Gazette 2016/46)**

(54) **CAPROLACTAM FORMULIERUNGEN**

CAPROLACTAM FORMULATIONS

FORMULES DE CAPROLACTAME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2015 EP 15167407**
**29.01.2016 EP 16153427**

(43) Veröffentlichungstag der Anmeldung:
**21.03.2018 Patentblatt 2018/12**

(73) Patentinhaber: **BASF SE**
**67056 Ludwigshafen am Rhein (DE)**

(72) Erfinder: **DESBOIS, Philippe**
**68535 Edingen-Neckarhausen (DE)**

(74) Vertreter: **BASF IP Association**
**BASF SE**
**G-FLP-C006**
**67056 Ludwigshafen (DE)**

(56) Entgegenhaltungen:
**EP-A1- 0 459 199      EP-A1- 2 789 641**
**US-A1- 2010 286 343**

## Beschreibung

Die vorliegende Erfindung betrifft ein Verfahren zur Herstellung eines Masterbatches (M), der mindestens ein Lactam und mindestens ein Fasermaterial enthält. Die vorliegende Erfindung betrifft außerdem den Masterbatch (M) und ein polymerisierbares Zweikomponentensystem (pS). Des Weiteren betrifft die vorliegende Erfindung ein Verfahren zur Herstellung eines Polyamids (P), die Verwendung des Masterbatches (M) zur Herstellung des Polyamids (P) sowie das Polyamid (P). Darüber hinaus betrifft die Erfindung einen Formkörper aus dem Polyamid (P).

Polyamide sind im Allgemeinen teilkristalline Polymere, die industriell von besonderer Bedeutung sind, da sie sich durch sehr gute mechanische Eigenschaften auszeichnen. Insbesondere besitzen sie eine hohe Festigkeit, Steifigkeit und Zähigkeit, eine gute Chemikalienbeständigkeit sowie eine hohe Abriebfestigkeit und Kriechstromfestigkeit. Diese Eigenschaften sind insbesondere von Bedeutung für die Herstellung von Spritzgussteilen. Eine hohe Zähigkeit ist besonders wichtig für die Verwendung von Polyamiden als Verpackungsfolien. Aufgrund ihrer Eigenschaften werden Polyamide industriell zur Herstellung von Textilien wie Angelschnüren, Kletterseilen und Teppichböden verwendet. Außerdem finden Polyamide Verwendung zur Herstellung von Dübeln, Schrauben und Kabelbindern. Darüber hinaus werden Polyamide als Lacke, Klebstoffe und Beschichtungsmaterialien eingesetzt.

Polyamidformteile werden in den letzten Jahren vermehrt als Werkstoffe und als Ersatz für metallische Werkstoffe, beispielsweise im Automobilbau, eingesetzt und können sowohl Teile im Antriebsstrang (Power Train) als auch Karosserieteile aus Metall ersetzen. Hierfür werden insbesondere faserverstärkte Polyamidformteile eingesetzt. Zur Herstellung von faserverstärkten Polyamidformteilen sind im Stand der Technik verschiedene Verfahren beschrieben. So kann beispielsweise eine Form, in der das Formteil hergestellt werden soll, ein Fasermaterial enthalten, und die entsprechenden Monomere zur Herstellung des Polyamids in die Form gegeben werden, wobei in situ die Polymerisation der Monomere gestartet wird. In der Regel ist dazu nur ein Erhitzen auf eine Temperatur oberhalb des Schmelzpunkts der Monomere erforderlich und nicht über den Schmelzpunkt des herzustellenden Polyamids.

Eine weitere Möglichkeit zur Herstellung von Polyamidformteilen, die Faserverstärkungen enthalten, ist beispielsweise in der WO 2014/086757 beschrieben. Dabei wird eine polymerisierbare Zusammensetzung, die ein Lactam, einen Katalysator und einen Aktivator enthält, in fester rieselfähiger Form auf ein Fasermaterial aufgetragen und dieses Fasermaterial anschließend bei erhöhtem Druck und einer Temperatur, bei der die feste polymerisierbare Zusammensetzung fließfähig ist, behandelt und schließlich das Fasermaterial abgekühlt. Anschließend kann das Fasermaterial einer Umformung unterzogen werden. Dabei polymerisiert das Lactam.

Die so erhaltenen Polyamidformteile besitzen bereits eine gute mechanische Stabilität.

Die EP 2 789 641 beschreibt ein Verfahren zur Herstellung von Zusammensetzungen, die ein Lactam und/oder Lacton, einen Katalysator und einen Aktivator enthalten. Zur Herstellung werden die Komponenten vermischt, beispielsweise in einem Extruder. Diese Zusammensetzungen sind nach dem in der EP 2 789 641 beschriebenen Verfahren gut herstellbar. Die Zusammensetzungen können zusätzlich Füll- und/oder Verstärkungsstoffe enthalten. Werden diese Füll- und/oder Verstärkungsstoffe während des Vermischens der anderen Komponenten im Extruder zugegeben, so werden allerdings häufig inhomogene Mischungen erhalten, die zur Verklumpung neigen und teilweise zu einem Verstopfen der Düse führen.

Die US 2010/0286343 beschreibt ein Verfahren um glasfaserverstärkte Polyamide herzustellen. Dabei wird ein Glasfasermaterial mit einem Lactammonomer und einem Polymerisationskatalysator gemischt und in einem Extruder erhitzt, so dass das Lactam polymerisiert. Dadurch wir ein glasfaserverstärktes Polyamid erhalten. Die US 2010/0286343 beschreibt allerdings keine Möglichkeit zur Herstellung eines Masterbatches, in dem das Lactam unpolymerisiert vorliegt.

Die EP 0 459 199 beschreibt die Herstellung von Lactamschmelzen mit erhöhter Viskosität. Die Lactamschmelzen enthalten ein Lactam sowie gegebenenfalls Füll- und Verstärkungsstoffe. Zur Herstellung werden sie unter Rühren homogenisiert. Nachteilig ist, dass diese Lactamschmelzen nicht oder nur schlecht in einem Extruder hergestellt werden können, da häufig inhomogene Mischungen erhalten werden, die zur Verklumpung neigen und teilweise die Düse verstopfen.

Es besteht daher Bedarf an weiteren Verfahren zur Herstellung von Formkörpern aus einem Polyamid (P) mit guter mechanischer Stabilität sowie an polymerisierbaren Zweikomponentensystemen (pS), die die Herstellung derartiger Formkörper ermöglichen sowie an einem Masterbatch (M), der in einem polymerisierbaren Zweikomponentensystem (pS) eingesetzt werden kann und Verfahren zur Herstellung des entsprechenden Masterbatches (M).

Die der vorliegenden Erfindung zugrunde liegende Aufgabe ist also die Bereitstellung eines Verfahrens zur Herstellung eines Masterbatches (M), der die Herstellung von Formkörpern aus einem Polyamid (P) ermöglicht.

Gelöst wird diese Aufgabe durch ein Verfahren zur Herstellung eines Masterbatches (M), der die Komponenten

    (A) mindestens ein Lactam und
    (D) mindestens ein Fasermaterial

enthält, wobei die Komponenten (A) und (D) in einem Extruder mit einer Scherrate von mindestens 500 s$^{-1}$

compoundiert werden und dass der Extruder mindestens die folgenden Abschnitte umfasst

(I) einen ersten Abschnitt,
(II) einen zweiten Abschnitt und
(III) einen dritten Abschnitt,

wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

Der erfindungsgemäß hergestellte Masterbatch (M) kann gelagert, transportiert und gehandelt werden und kann auch zu einem späteren Zeitpunkt zur Herstellung eines Polyamids (P) eingesetzt werden.

Die mit dem erfindungsgemäß hergestellten Masterbatch (M), insbesondere mit dem erfindungsgemäßen polymerisierbaren Zweikomponentensystem (pS) hergestellten Polyamide (P) sowie Formkörper daraus weisen zudem eine besonders gleichmäßige Verteilung des mindestens einen Fasermaterials (Komponente (D)) auf, was eine besonders gute mechanische Stabilität und Verstärkung des Formkörpers bewirkt.

Das erfindungsgemäße polymerisierbare Zweikomponentensystem (pS), das den Masterbatch (M) enthält, eignet sich außerdem insbesondere für Spritzgussverfahren, wobei die Düsen, insbesondere die, durch die der Masterbatch (M) geführt wird, beim Spritzguss überraschenderweise trotz des in dem Masterbatch (M) enthaltenen mindestens einen Fasermaterials (Komponente (D)) nicht verstopfen. Zudem ist die Polymerisation des polymerisierbaren Zweikomponentensystems (pS) besonders vollständig, was in einem niedrigen Restmonomergehalt des erhaltenen Polyamids (P) resultiert.

Nachfolgend wird das erfindungsgemäße Verfahren näher erläutert.

In dem erfindungsgemäßen Verfahren werden die Komponenten (A) - mindestens ein Lactam, und (D) - mindestens ein Fasermaterial, in einem Extruder mit einer Scherrate von mindestens 500 s$^{-1}$ compoundiert.

Unter "compoundieren" wird im Rahmen der vorliegenden Erfindung das Vermischen der Komponenten (A) und (D) verstanden.

Die Komponenten (A) und (D) können nach allen dem Fachmann bekannten Methoden in dem Extruder compoundiert werden. Beispielsweise können die Komponenten (A) und (D) gemeinsam in den Extruder eingebracht und in diesem compoundiert werden. Ebenso ist es möglich und erfindungsgemäß bevorzugt, dass zunächst die Komponente (A) in den Extruder eingebracht wird und anschließend die Komponente (D) zugeführt wird. Anschließend werden die Komponenten (A) und (D) compoundiert.

Erfindungsgemäß am meisten bevorzugt wird zunächst ein erster Teil der Komponente (A) in den Extruder eingebracht, anschließend wird die Komponente (D) zugeführt und der erste Teil der Komponente (A) und die Komponente (D) compoundiert unter Erhalt einer ersten Mischung (M1), die den ersten Teil der Komponente (A) und die Komponente (D) enthält. Anschließend wird ein zweiter Teil der Komponente (A) in den Extruder eingebracht und die erste Mischung (M1) und der zweite Teil der Komponente (A) compoundiert unter Erhalt des Masterbatches (M).

Die Compoundierung kann bei einer beliebigen Temperatur erfolgen unter der Voraussetzung, dass die Komponente (A) bei den im Extruder vorliegenden Bedingungen flüssig ist. Beispielsweise kann die Compoundierung bei einer Manteltemperatur des Extruders im Bereich von 20 bis 220 °C durchgeführt werden, bevorzugt bei einer Manteltemperatur des Extruders im Bereich von 30 bis 180 °C und insbesondere bevorzugt bei einer Manteltemperatur des Extruders im Bereich von 35 bis 170 °C.

Unter "flüssig" wird im Rahmen der vorliegenden Erfindung verstanden, dass die Komponente (A) im Extruder förderbar ist.

Unter "Manteltemperatur des Extruders" wird die Temperatur des Mantels des Extruders verstanden. Die Manteltemperatur des Extruders ist also die Temperatur der Außenwand des Gehäuses des Extruders.

Die Manteltemperatur des Extruders kann höher sein als die Temperatur der Komponenten im Extruder, ebenso ist es möglich, dass die Manteltemperatur des Extruders niedriger ist als die Temperatur der Komponenten im Extruder. Beispielsweise ist es möglich, dass die Manteltemperatur des Extruders zunächst höher ist als die Temperatur der Komponenten im Extruder, wenn die Komponenten erwärmt werden. Werden die Komponenten im Extruder abgekühlt, so ist es möglich, dass die Manteltemperatur des Extruders niedriger ist, als die Temperatur der Komponenten im Extruder.

Üblicherweise wird der Extruder während des erfindungsgemäßen Verfahrens geheizt oder gekühlt. Das Heizen und das Kühlen des Extruders kann nach allen dem Fachmann bekannten Methoden erfolgen. Üblicherweise wird der Extruder durch die Reibungswärme, die bei der Compoundierung der Komponenten (A) und (D) frei gesetzt wird, geheizt. Zusätzlich kann der Extruder auch von außen geheizt werden, beispielsweise durch das Zirkulieren einer Flüssigkeit innerhalb des Gehäuses des Extruders. Diese Flüssigkeit kann auch eingesetzt werden zur Kühlung des Extruders. Diese Verfahren sind dem Fachmann als solche bekannt.

Der Masterbatch (M) wird nach der Compoundierung der Komponenten (A) und (D) üblicherweise aus dem Extruder entnommen. Der Masterbatch (M) kann nach allen dem Fachmann bekannten Methoden aus dem Extruder entnommen werden, beispielsweise durch eine Düse. Bevorzugt wird der Masterbatch (M) granuliert unter Erhalt eines granulierten Masterbatches (gM).

Verfahren zur Granulierung des Masterbatches (M) sind dem Fachmann als solche bekannt. Beispielsweise kann der Masterbatch (M) auf einem Förderband abgekühlt und anschließend granuliert werden. Es ist darüber hinaus möglich, dass der Masterbatch (M) bei Entnahme aus dem Extruder beispielsweise durch eine Düse, direkt in Form eines Granulats als granulierter Masterbatch (gM) erhalten wird. In dieser Ausführungsform ist eine zusätzliche Granulierung nicht erforderlich. Diese Ausführungsform ist bevorzugt.

Erfindungsgemäß weist der Extruder eine Scherrate von mindestens 500 s$^{-1}$ auf, bevorzugt von mindestens 800 s$^{-1}$ und insbesondere bevorzugt von mindestens 1000 s$^{-1}$.

Beispielsweise weist der Extruder eine Scherrate im Bereich von 500 bis 25 000 s$^{-1}$, bevorzugt im Bereich von 800 bis 25 000 s$^{-1}$ und insbesondere bevorzugt im Bereich von 1 000 bis 25 000 s$^{-1}$ auf.

Die Scherrate des Extruders kann nach folgender Formel berechnet werden:

$$S = (\pi \cdot d \cdot N) / \Delta$$

wobei

S     die Scherrate ist,
d     der Durchmesser der Schnecke des Extruders,
N     die Drehzahl der Schnecke des Extruders, und
$\Delta$     die Breite des Spalts zwischen der äußeren Wand der Schnecke und der Innenwand des Extruders.

Der Durchmesser (d) der Schnecke liegt üblicherweise in einem Bereich von 10 bis 300 mm, bevorzugt in einem Bereich von 20 bis 200 mm und insbesondere bevorzugt in einem Bereich von 50 bis 100 mm.

Die Drehzahl (N) der Schnecke liegt beispielsweise in einem Bereich von 50 bis 2 000 rpm (rounds per minute), bevorzugt im Bereich von 80 bis 1 500 rpm und insbesondere bevorzugt im Bereich von 100 bis 1 200 rpm.

Die Breite ($\Delta$) des Spalts liegt üblicherweise in einem Bereich von 10 bis 500 $\mu$m, bevorzugt in einem Bereich von 50 bis 250 $\mu$m und insbesondere bevorzugt in einem Bereich von 100 bis 200 $\mu$m.

Die Schubspannung ($\sigma$), die durch den Extruder auf die enthaltenen Komponenten wirkt, ergibt sich aus dem Produkt der Scherrate (S) des Extruders und der Viskosität ($\eta$) der im Extruder enthaltenen Komponenten:

$$\sigma = S \cdot \eta$$

Die Viskosität ($\eta$) der im Extruder enthaltenen Komponenten liegt üblicherweise im Bereich im Bereich von 2 bis 1000 mPas , bevorzugt im Bereich von 5 bis 500 mPas und insbesondere bevorzugt im Bereich von 10 bis 300 mPas, gemessen mit einem schubspannungskontrollierten Rotationsviskosimeter bei einer Scherrate von 100 s$^{-1}$ und einer Temperatur von 100 °C.

Die Schubspannung ($\sigma$) liegt daher beispielsweise in einem Bereich von 2,5 bis 12500 Pa, bevorzugt im Bereich von 4 bis 12500 Pa und insbesondere bevorzugt im Bereich von 5 bis 12500 Pa.

Als Extruder eignen sich alle dem Fachmann bekannten Extruder wie beispielsweise Einschneckenextruder oder Doppelschneckenextruder. Doppelschneckenextruder sind erfindungsgemäß bevorzugt. Einschneckenextruder und Doppelschneckenextruder sind dem Fachmann bekannt.

Erfindungsgemäß umfasst der Extruder mindestens die folgenden Abschnitte:

(I) einen ersten Abschnitt,
(II) einen zweiten Abschnitt und
(III) einen dritten Abschnitt.

Die einzelnen Abschnitte des Extruders unterscheiden sich durch die Konzentration der in diesen Abschnitten im Extruder enthaltenen Komponenten (A) und (D) sowie der gegebenenfalls enthaltenen Komponenten (B), (C) und (E).

Gegenstand der vorliegenden Erfindung ist daher auch ein Verfahren, bei dem sich die Konzentration der Komponenten (A) und (D) im ersten Abschnitt (I) des Extruders von der Konzentration der Komponenten (A) und (D) in dem zweiten Abschnitt (II) und in dem dritten Abschnitt (III) des Extruders unterscheidet und bei dem sich die Konzentration der Komponenten (A) und (D) im zweiten Abschnitt (II) des Extruder von der Konzentration der Komponenten (A) und (D) im dritten Abschnitt (III) des Extruders unterscheidet.

Darüber hinaus können sich die Abschnitte beispielsweise in den Temperaturbereichen, die der Extruder in den jeweiligen Abschnitten aufweist, unterscheiden sowie gegebenenfalls in den Druckbereichen, die der Extruder in den jeweiligen Abschnitten aufweist.

Erfindungsgemäß weist der Extruder im ersten Abschnitt (I) eine erste Temperatur (T1) auf. "Eine erste Temperatur (T1)" bedeutet im Rahmen der vorliegenden Erfindung, dass der erste Abschnitt (I) genau eine erste Temperatur (T1) aufweisen kann, die über den gesamten ersten Abschnitt (I) gleich (konstant) ist, ebenso ist es möglich, dass der Extruder zwei oder mehrere erste Temperaturen (T1) aufweist. Weist der Extruder im ersten Abschnitt (I) zwei oder mehrere erste Temperaturen (T1) auf, so ist es möglich, dass der erste Abschnitt (I) einen Temperaturgradienten aufweist und die erste Temperatur (T1) kontinuierlich zunimmt oder abnimmt. Ebenso ist es möglich, dass sich Bereiche konstanter erster Temperatur (T1) mit Bereichen, in denen die erste Temperatur kontinuierlich zunimmt oder abnimmt, abwechseln. Darüber hinaus kann sich die Temperatur zwischen Bereichen konstanter erster Temperatur (T1) auch sprunghaft ändern.

Bevorzugt liegt die erste Temperatur (T1) im Bereich von 20 bis 70 °C, besonders bevorzugt im Bereich von 25 bis 50 °C und insbesondere bevorzugt im Bereich von 30 bis 40 °C.

Im zweiten Abschnitt (II) weist der Extruder eine zweite Temperatur (T2) auf. "Eine zweite Temperatur (T2)" bedeutet im Rahmen der vorliegenden Erfindung, dass der Extruder im zweiten Abschnitt (II) genau eine zweite Temperatur (T2) aufweisen kann, die über den gesamten zweiten Abschnitt (II) gleich (konstant) ist, ebenso ist es möglich, dass der Extruder im zweiten Abschnitt (II) zwei oder mehrere zweite Temperaturen (T2) aufweist. Weist der Extruder im zweiten Abschnitt (II) zwei oder mehrere zweite Temperaturen (T2) auf, so ist es möglich, dass der zweite Abschnitt (II) einen Temperaturgradienten aufweist und die zweite Temperatur (T2) kontinuierlich zunimmt oder abnimmt. Ebenso ist es möglich, dass sich Bereiche konstanter zweiter Temperatur (T2) mit Bereichen, in denen die zweite Temperatur (T2) kontinuierlich zunimmt oder abnimmt, abwechseln. Darüber hinaus kann sich die Temperatur zwischen Bereichen konstanter zweiter Temperatur (T2) auch sprunghaft ändern.

Erfindungsgemäß liegt die zweite Temperatur (T2) im Bereich von 105 bis 220 °C, besonders bevorzugt im Bereich von 110 bis 180 °C und insbesondere bevorzugt im Bereich von 115 bis 175 °C.

Der Extruder weist im dritten Abschnitt (III) eine dritte Temperatur (T3) auf. "Eine dritte Temperatur (T3)" bedeutet im Rahmen der vorliegenden Erfindung, dass der Extruder im dritten Abschnitt (III) genau eine dritte Temperatur (T3) aufweisen kann, die über den gesamten dritten Abschnitt (III) gleich (konstant) ist, ebenso ist es möglich, dass der dritte Abschnitt (III) des Extruders zwei oder mehrere dritte Temperaturen (T3) aufweist. Weist der Extruder im dritten Abschnitt (III) zwei oder mehrere dritte Temperaturen (T3) auf, so ist es möglich, dass der dritte Abschnitt (III) einen Temperaturgradienten aufweist und die dritte Temperatur (T3) kontinuierlich zunimmt oder abnimmt. Ebenso ist es möglich, dass sich Bereiche konstanter dritter Temperatur (T3) mit Bereichen, in denen die dritte Temperatur (T3) kontinuierlich zunimmt oder abnimmt, abwechseln. Darüber hinaus kann sich die Temperatur zwischen den Bereichen konstanter dritter Temperatur (T3) auch sprunghaft ändern.

Die dritte Temperatur (T3) liegt bevorzugt im Bereich von 20 bis < 105 °C, besonders bevorzugt im Bereich von 30 bis 102 °C und insbesondere bevorzugt im Bereich von 35 bis 100 °C.

Bevorzugt unterscheidet sich die zweite Temperatur (T2) von der ersten Temperatur (T1) und von der dritten Temperatur (T3).

Gegenstand der vorliegenden Erfindung ist daher auch ein Verfahren, bei dem sich die zweite Temperatur (T2) von der ersten Temperatur (T1) unterscheidet und bei dem sich die zweite Temperatur (T2) von der dritten Temperatur (T3) unterscheidet.

Es ist also erfindungsgemäß, dass der Extruder mindestens die folgenden Abschnitte umfasst:

    (I) einen ersten Abschnitt,
    (II) einen zweiten Abschnitt und
    (III) einen dritten Abschnitt,

wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

Es ist darüber hinaus bevorzugt, dass der Extruder im ersten Abschnitt (I) eine erste Temperatur (T1), die im Bereich von 20 bis 70 °C liegt, aufweist und/oder der Extruder im dritten Abschnitt (III) eine dritte Temperatur (T3), die im Bereich von 20 bis < 105 °C liegt, aufweist.

Gegenstand der vorliegenden Erfindung ist somit auch ein Verfahren, bei dem der Extruder im ersten Abschnitt (I) eine erste Temperatur (T1), die im Bereich von 20 bis 70 °C liegt, aufweist und/oder der Extruder im dritten Abschnitt (III) eine dritte Temperatur (T3), die im Bereich von 20 bis < 105 °C liegt, aufweist.

Unter der ersten Temperatur (T1), der zweiten Temperatur (T2) und der dritten Temperatur (T3) wird jeweils die Manteltemperatur des Extruders in den jeweiligen Abschnitten verstanden. Die erste Temperatur (T1), die der Extruder im ersten Abschnitt (I) aufweist, wird daher auch als erste Manteltemperatur des Extruders bezeichnet. Die Bezeichnungen "erste Temperatur (T1)" und "erste Manteltemperatur" werden daher im Rahmen der vorliegenden Erfindung synonym gebraucht und besitzen daher dieselbe Bedeutung. Die zweite Temperatur (T2), die der Extruder im zweiten Abschnitt (II) aufweist, wird daher auch als zweite Manteltemperatur des Extruders bezeichnet. Die Bezeichnungen "zweite Temperatur (T2)" und "zweite Manteltemperatur" werden daher im Rahmen der vorliegenden Erfindung synonym gebraucht und besitzen daher dieselbe Bedeutung. Die dritte Temperatur (T3), die der Extruder im dritten Abschnitt (III) aufweist, wird daher auch als dritte Manteltemperatur des Extruders bezeichnet. Die Bezeichnungen "dritte Temperatur (T3)" und "dritte Manteltemperatur" werden daher im Rahmen der vorliegenden Erfindung synonym gebraucht und besitzen daher dieselbe Bedeutung.

Für die Bestimmung der ersten Manteltemperatur, der zweiten Manteltemperatur und der dritten Manteltemperatur gelten die zuvor beschriebenen Ausführungen für die Manteltemperatur des Extruders entsprechend.

Jeder Abschnitt des Extruders umfasst zudem mindestens eine Zone.

"Mindestens eine Zone" bedeutet im Rahmen der vorliegenden Erfindung sowohl genau eine Zone, als auch zwei oder mehrere Zonen.

Umfasst ein Abschnitt des Extruders genau eine Zone, so entspricht der Abschnitt des Extruders der Zone.

Die Zonen unterscheiden sich beispielsweise in der Temperatur in den Zonen, in dem Druck in den Zonen und/oder in den in den Zonen enthaltenen Elementen.

Die Zonen können sich darüber hinaus in der Länge der enthaltenen Elemente unterscheiden.

Unter "enthaltenen Elementen" werden beispielsweise Förderelemente, Stauelemente, Mischelemente und Knetelemente verstanden. Geeignete Förderelemente, Stauelemente, Mischelemente und Knetelemente, die in dem Extruder enthalten sein können, sind dem Fachmann bekannt.

Förderelemente dienen dem Weitertransport der im Extruder enthaltenen Komponenten innerhalb des Extruders. Die Schergeschwindigkeit, die durch die Förderelemente auf die Komponenten im Extruder wirkt, ist geringer als die Schergeschwindigkeit, die durch Mischelemente oder Knetelemente auf die Komponenten im Extruder wirkt. Geeignete Förderelemente sind dem Fachmann bekannt und beispielsweise Schneckenförderelemente.

Mischelemente dienen dem Vermischen der einzelnen, im Extruder enthaltenen Komponenten. Die Schergeschwindigkeit, die durch die Mischelemente auf die Komponenten im Extruder wirkt, ist üblicherweise geringer als die Schergeschwindigkeit, die durch Knetelemente auf die Komponenten wirkt. Geeignete Mischelemente sind dem Fachmann bekannt und beispielsweise Zahnmischelemente oder Schneckenmischelemente.

Knetelemente dienen ebenfalls dem Vermischen der einzelnen, im Extruder enthaltenen Komponenten. Gleichzeitig zerkleinern sie beispielsweise die Komponente (D). Die Schergeschwindigkeit, die durch die Knetelemente auf die Komponenten im Extruder wirkt, ist üblicherweise höher als die Schergeschwindigkeit, die durch Mischelemente und durch Förderelemente auf die Komponenten wirkt. Geeignete Knetelemente sind dem Fachmann bekannt und beispielsweise Knetschnecken oder Knetblöcke, wie Scheibenknetblöcke oder Schulterknetblöcke.

Die Begriffe Schergeschwindigkeit und Scherrate werden im Rahmen der vorliegenden Erfindung synonym gebraucht und besitzen daher die gleiche Bedeutung.

Stauelemente wirken im Gegensatz zu Förderelementen rückfördernd und stauen so die im Extruder enthaltenen Komponenten. Als Stauelemente werden üblicherweise Förderelemente eingesetzt, die so montiert werden, dass sie entgegen der Transportrichtung im Extruder fördern.

Zonen, die Förderelemente enthalten, werden auch als "Förderzonen" bezeichnet. Zonen, die Stauelemente enthalten, werden auch als "Stauzonen" bezeichnet. Zonen, die Mischelemente enthalten, werden auch als "Mischzonen" bezeichnet und Zonen, die Knetelemente enthalten, werden auch als "Knetzonen" bezeichnet.

In einer Ausführungsform umfasst der Extruder 1 bis 20 Förderzonen, 1 bis 10 Stauzonen, 1 bis 10 Mischzonen und 1 bis 10 Knetzonen, bevorzugt 2 bis 15 Förderzonen, 1 bis 8 Stauzonen, 1 bis 5 Mischzonen und 2 bis 10 Knetzonen, insbesondere bevorzugt 5 bis 13 Förderzonen, 1 bis 5 Stauzonen, 1 bis 3 Mischzonen und 3 bis 7 Knetzonen.

Beispielsweise umfasst der erste Abschnitt (I) des Extruders bevorzugt 1 bis 5 Förderzonen und optional 1 bis 3 Mischzonen, besonders bevorzugt 1 bis 3 Förderzonen und optional 1 Mischzone und insbesondere bevorzugt genau 1 Förderzone.

Ebenso ist es bevorzugt, dass der zweite Abschnitt (II) des Extruders 2 bis 10 Knetzonen und 1 bis 10 Förderzonen umfasst, bevorzugt 2 bis 8 Knetzonen und 1 bis 8 Förderzonen und insbesondere bevorzugt 2 bis 5 Knetzonen und 1 bis 4 Förderzonen.

Darüber hinaus ist es bevorzugt, dass der dritte Abschnitt (III) des Extruders 1 bis 5 Mischzonen, 1 bis 5 Knetzonen, 2 bis 10 Förderzonen und 1 bis 5 Stauzonen umfasst, bevorzugt 1 bis 4 Mischzonen, 1 bis 3 Knetzonen, 2 bis 8 Förderzonen und 1 bis 4 Stauzonen und insbesondere bevorzugt 1 bis 3 Mischzonen, 1 bis 2 Knetzonen, 2 bis 5 Förderzonen und 1 bis 3 Stauzonen.

Gegenstand der vorliegenden Erfindung ist somit auch ein Verfahren, bei dem der zweite Abschnitt (II) des Extruders 2 bis 10 Knetzonen und 1 bis 10 Förderzonen umfasst und/oder der dritte Abschnitt (III) des Extruders 1 bis 5 Mischzonen, 1 bis 5 Knetzonen, 2 bis 10 Förderzonen und 1 bis 5 Stauzonen umfasst.

Üblicherweise folgt auf mindestens eine Förderzone immer mindestens eine Mischzone oder mindestens eine Knetzone oder mindestens eine Stauzone.

Üblicherweise folgt auf eine Förderzone immer genau eine Mischzone oder genau eine Knetzone oder genau eine Stauzone.

Es ist erfindungsgemäß bevorzugt, dass der Extruder räumlich unmittelbar vor dem Ort der Entnahme des Masterbatches (M), bevorzugt räumlich unmittelbar vor der Düse zur Entnahme des Masterbatches (M), eine Mischzone aufweist. Besonders bevorzugt weist der Extruder räumlich unmittelbar vor dem Ort der Entnahme des Masterbatches (M), bevorzugt räumlich unmittelbar vor der Düse zur Entnahme des Masterbatches (M), eine Mischzone mit mindestens einem Zahnscheiben-Element in Schneckenkonfiguration auf.

"Mindestens ein Zahnscheiben-Element" bedeutet im Rahmen der vorliegenden Erfindung sowohl genau ein Zahnscheiben-Element, als auch zwei oder mehrere Zahnscheibenelemente. Zwei oder mehrere Zahnscheiben-Elemente sind bevorzugt, besonders bevorzugt sind 2 bis 5 Zahnscheiben-Elemente.

In einer erfindungsgemäß bevorzugten Ausführungsform werden die Komponenten (A) und (D) compoundiert, indem zunächst die Komponente (A) in den Extruder eingebracht wird. Die Komponente (A) kann in den Extruder in allen dem Fachmann bekannten Formen eingebracht werden, beispielsweise als Granulat, als Pulver oder in flüssiger Form.

Wird die Komponente (A) in fester Form, also beispielsweise als Granulat oder Pulver, in den Extruder eingebracht, so wird sie in dem Extruder dann üblicherweise zunächst verflüssigt und in mindestens eine Förderzone, bevorzugt in genau eine Förderzone, eingebracht. Auf diese mindestens eine Förderzone folgt bevorzugt mindestens eine Knetzone, besonders bevorzugt genau eine Knetzone, in der die Komponente (D) zugegeben wird. Auf die mindestens eine Knetzone, bevorzugt genau eine Knetzone, in der die Komponente (D) zugegeben wird, folgt üblicherweise zumindest eine weitere Förderzone und zumindest eine weitere Knetzone, bevorzugt im Bereich von 2 bis 10 Knetzonen und im Bereich von 1 bis 10 Förderzonen. Die bevorzugten 2 bis 10 Knetzonen und 1 bis 10 Förderzonen wechseln sich bevorzugt ab, sodass auf eine Knetzone eine Förderzone folgt und auf eine Förderzone eine Knetzone folgt. In diesen wird dann die Komponente (A) mit der Komponente (D) compoundiert unter Erhalt des Masterbatches (M).

In einer bevorzugten Ausführungsform wird zunächst ein erster Teil der Komponente (A) in den Extruder eingebracht. Für dieses Einbringen gelten die zuvor beschriebenen Ausführungen und Bevorzugungen für das Einbringen der Komponente (A) entsprechend.

Anschließend wird in einer Knetzone die Komponente (D) zugegeben. Auf diese Knetzone, in der die Komponente (D) zugegeben wird, folgen bevorzugt mindestens eine Förderzone und mindestens eine Knetzone, in denen der erste Teil der Komponente (A) mit der Komponente (D) compoundiert wird unter Erhalt einer ersten Mischung (M1), die den ersten Teil der Komponente (A) und die Komponente (D) enthält. Für die mindestens eine Förderzone und die mindestens eine Knetzone gelten die zuvor beschriebenen Ausführungen und Bevorzugungen entsprechend.

In einer weiteren Knetzone wird dann ein zweiter Teil der Komponente (A) zugegeben. Auf diese Knetzone folgt üblicherweise mindestens eine Förderzone und mindestens eine Knetzone sowie gegebenenfalls mindestens eine Stauzone und mindestens eine Mischzone, in der der zweite Teil der Komponente (A) mit der ersten Mischung (M1) compoundiert wird unter Erhalt des Masterbatches (M).

Diese Ausführungsform ist bevorzugt. In dieser Ausführungsform ist beispielsweise der erste Abschnitt (I) des Extruders der Abschnitt, in dem der Extruder den ersten Teil der Komponente (A) enthält. Der zweite Abschnitt (II) beginnt mit der Zugabe der Komponente (D) in den Extruder. Der dritte Abschnitt (III) beginnt mit der Zugabe des zweiten Teils der Komponente (A) in den Extruder.

Im ersten Abschnitt (I) des Extruders enthält der Extruder also die Komponente (A), im zweiten Abschnitt (II) des Extruders enthält der Extruder die Komponente (A) und (D) und im dritten Abschnitt (III) des Extruders enthält der Extruder die Komponente (A) und die Komponente (D), wobei sich die Konzentration der Komponenten (A) und (D) im dritten Abschnitt (III) von der Konzentration der Komponenten (A) und (D) im zweiten Abschnitt (II) unterscheidet.

Es versteht sich von selbst, dass wenn in einem Abschnitt des Extruders zumindest eine der weiter unten beschriebenen Komponenten (B), mindestens ein Katalysator, (C), mindestens ein Aktivator oder (E), mindestens ein Verdicker, zusätzlich zugegeben wird, dieser Abschnitt sowie die auf ihn folgenden Abschnitte diese Komponente zusätzlich enthalten.

Die Komponenten (A) und (D) werden in dem Extruder üblicherweise in den gleichen Mengenverhältnissen compoundiert, wie sie in dem herzustellenden Masterbatch (M) enthalten sein sollen. Beispielsweise werden im Bereich von 10 bis 99 Gew.-% der Komponente (A) und im Bereich von 1 bis 90 Gew.-% der Komponente (D), jeweils bezogen auf die Summe der Gewichtsprozente der Komponenten (A) und (D), in dem Extruder compoundiert.

Bevorzugt werden im Bereich von 25 bis 85 Gew.-% der Komponente (A) und im Bereich von 15 bis 75 Gew.-% der Komponente (D), jeweils bezogen auf die Summe der Gewichtsprozente der Komponenten (A) und (D), in dem Extruder compoundiert.

Besonders bevorzugt werden im Bereich von 50 bis 75 Gew.-% der Komponente (A) und im Bereich von 25 bis 50 Gew.-% der Komponente (D), jeweils bezogen auf die Summe der Gewichtsprozente der Komponenten (A) und (D), in dem Extruder compoundiert.

Wird in einer bevorzugten Ausführungsform der vorliegenden Erfindung zunächst ein erster Teil der Komponente (A) in den Extruder eingebracht, anschließend die Komponente (D) und danach ein zweiter Teil der Komponente (A), so werden als erster Teil der Komponente (A) bevorzugt im Bereich von 20 bis 80 % der Komponente (A) eingebracht und als zweiter Teil der Komponente (A) im Bereich von 80 bis 20 % der Komponente (A), jeweils bezogen auf die Gesamtmenge der Komponente (A), die in den Extruder eingebracht wird. Besonders bevorzugt werden als erster Teil der Komponente (A) im Bereich von 40 bis 60 % der Komponente (A) eingebracht und als zweiter Teil der Komponente (A) im Bereich von 60 bis 40 % der Komponente (A), jeweils bezogen auf die Gesamtmenge der Komponente (A), die in den Extruder eingebracht wird.

Soll der Masterbatch (M) noch weitere Komponenten sowie gegebenenfalls eine Komponente (B), mindestens einen Katalysator, eine Komponente (C), mindestens einen Aktivator, und/oder eine Komponente (E), mindestens einen Verdicker, enthalten, so werden diese ebenfalls in dem Extruder compoundiert.

Für die Komponenten (A), (D) und gegebenenfalls (B), (C) und (E) sowie gegebenenfalls die weiteren Komponenten, die in dem Extruder compoundiert werden können, gelten die nachfolgenden Ausführungen und Bevorzugungen für die in dem Masterbatch (M) enthaltenen Komponenten (A), (D) und gegebenenfalls (B), (C) und (E) sowie für die gegebenenfalls weiteren Komponenten entsprechend.

Soll der Masterbatch (M) eine Komponente (E), mindestens einen Verdicker, enthalten, so wird diese bevorzugt zusammen mit der Komponente (A), insbesondere bevorzugt mit dem ersten Teil der Komponente (A) in den Extruder eingebracht. Es versteht sich von selbst, dass der Extruder dann in den Abschnitten zusätzlich die Komponente (E) enthält.

Soll der Masterbatch (M) eine Komponente (B), mindestens einen Katalysator, und/oder eine Komponente (C), mindestens einen Aktivator, enthalten, so werden diese bevorzugt ebenfalls mit der Komponente (A) in den Extruder eingebracht.

Die Komponente (B) und die Komponente (C) können sowohl mit dem ersten Teil der Komponente (A) in den Extruder eingebracht werden als auch mit dem zweiten Teil der Komponente (A). Es ist erfindungsgemäß allerdings bevorzugt, dass die Komponente (B) getrennt von der Komponente (C) in den Extruder eingebracht wird. Es ist also bevorzugt, dass beispielsweise die Komponente (B) mit dem ersten Teil der Komponente (A) in den Extruder eingebracht wird und die Komponente (C) mit dem zweiten Teil der Komponente (A) in den Extruder eingebracht wird. Ebenso ist es möglich, die Komponente (C) mit dem ersten Teil der Komponente (A) in den Extruder einzubringen und die Komponente (B) mit dem zweiten Teil der Komponente (A) in den Extruder einzubringen.

Masterbatch (M)

Der Masterbatch (M), der mit dem erfindungsgemäßen Verfahren erhalten wird, enthält erfindungsgemäß die Komponenten (A) - mindestens ein Lactam, und (D) - mindestens ein Fasermaterial.

Beispielsweise enthält der Masterbatch (M) im Bereich von 1 bis 90 Gew.-% der Komponente (D), bevorzugt im Bereich von 15 bis 75 Gew.-% und insbesondere bevorzugt im Bereich von 25 bis 50 Gew.-%, jeweils bezogen auf das Gesamtgewicht des Masterbatches (M).

Gegenstand der vorliegenden Erfindung ist somit auch ein Verfahren, bei dem der Masterbatch (M) im Bereich von 1 bis 90 Gew.-% der Komponente (D) enthält, bezogen auf das Gesamtgewicht des Masterbatches (M).

In einer weiteren Ausführungsform enthält der Masterbatch (M) im Bereich von 10 bis 99 Gew.-% der Komponente (A) und im Bereich von 1 bis 90 Gew.-% der Komponente (D), jeweils bezogen auf die Summe der Gewichtsprozente der Komponenten (A) und (D), bevorzugt bezogen auf das Gesamtgewicht des Masterbatches (M).

Bevorzugt enthält der Masterbatch (M) im Bereich von 25 bis 85 Gew.-% der Komponente (A) und im Bereich von 15 bis 75 Gew.-% der Komponente (D), jeweils bezogen auf die Summe der Gewichtsprozente der Komponenten (A) und (D), bevorzugt bezogen auf das Gesamtgewicht des Masterbatches (M).

Besonders bevorzugt enthält der Masterbatch (M) im Bereich von 50 bis 75 Gew.-% der Komponente (A) und im Bereich von 25 bis 50 Gew.-% der Komponente (D), jeweils bezogen auf die Summe der Gewichtsprozente der Komponenten (A) und (D), bevorzugt bezogen auf das Gesamtgewicht des Masterbatches (M).

In einer bevorzugten Ausführungsform enthält der Masterbatch (M) zusätzlich eine Komponente (B) - mindestens einen Katalysator. Für die Komponente (B) gelten die nachfolgend beschriebenen Ausführungen und Bevorzugungen.

Der Masterbatch (M) enthält beispielsweise im Bereich von 1 bis 20 Gew.-% der Komponente (B), bevorzugt im Bereich von 2 bis 10 Gew.-% der Komponente (B) und besonders bevorzugt im Bereich von 3 bis 6 Gew.-% der Komponente (B), jeweils bezogen auf das Gesamtgewicht des Masterbatches (M).

In einer weiteren bevorzugten Ausführungsform enthält der Masterbatch (M) keine Komponente (B).

In einer weiteren bevorzugten Ausführungsform enthält der Masterbatch (M) zusätzlich eine Komponente (C) - mindestens einen Aktivator. Für die Komponente (C) gelten die weiter unten beschriebenen Ausführungen und Bevorzugungen entsprechend.

Der Masterbatch (M) kann beispielsweise im Bereich von 0,5 bis 10 Gew.-%, bevorzugt im Bereich von 1 bis 5 Gew.-% und insbesondere bevorzugt im Bereich von 1,5 bis 3 Gew.-% der Komponente (C) enthalten, bezogen auf das Gesamtgewicht des Masterbatches (M).

In einer weiteren bevorzugten Ausführungsform enthält der Masterbatch (M) keine Komponente (C).

Es ist erfindungsgemäß insbesondere bevorzugt, dass der Masterbatch (M) entweder die Komponente (B) oder die Komponente (C) enthält. Enthält der Masterbatch (M) also die Komponente (B), so enthält er bevorzugt keine Komponente (C).

Enthält der Masterbatch die Komponente (C), so enthält er bevorzugt keine Komponente (B).

In einer bevorzugten Ausführungsform enthält der Masterbatch (M) zusätzlich eine Komponente (E) - mindestens einen Verdicker. Verdicker als solche sind dem Fachmann bekannt. Bevorzugt ist die Komponente (E) ausgewählt aus der Gruppe bestehend aus thermoplastischen Polystyrolen, Polysulfonen, Polyphenylethern, Polybutadienen, Polyisoprenen und Nanofüllstoffen.

Geeignete Nanofüllstoffe sind beispielsweise Silicate, Graphene und Carbon Nanotubes.

Gegenstand der vorliegenden Erfindung ist somit auch ein Verfahren, bei dem der Masterbatch (M) zusätzlich eine Komponente (E), mindestens einen Verdicker, enthält, wobei die Komponente (E) ausgewählt ist aus der Gruppe bestehend aus thermoplastischen Polystyrolen, Polysulfonen, Polyphenylethern, Polybutadienen, Polyisoprenen und Nanofüllstoffen.

Der Masterbatch (M) enthält beispielsweise im Bereich von 0,1 bis 50 Gew.-%, bevorzugt im Bereich von 0,5 bis 30 Gew.-% und insbesondere bevorzugt im Bereich von 1 bis 20 Gew.-% der Komponente (E), bezogen auf das Gesamtgewicht des Masterbatches (M).

Darüber hinaus kann der Masterbatch (M) weitere Komponenten enthalten.

Derartige weitere Komponenten sind dem Fachmann als solche bekannt und beispielsweise Stabilisatoren, Farbstoffe, Antistatika, Füllöle, Oberflächenverbesserer, Sikkative, Entformungshilfsmittel, Trennmittel, Antioxidantien, Lichtstabilisatoren, PVC-Stabilisatoren, Gleitmittel, Flammschutzmittel, Treibmittel, Schlagzähmodifikatoren und Nukleierungshilfsmittel.

Der Masterbatch (M) enthält beispielsweise im Bereich von 0,1 bis 10 Gew.-%, bevorzugt im Bereich von 0,2 bis 7 Gew.-% und insbesondere bevorzugt im Bereich von 0,3 bis 5 Gew.-% der weiteren Komponenten, bezogen auf das Gesamtgewicht des Masterbatches (M).

Die gegebenenfalls in dem Masterbatch enthaltenen weiteren Komponenten sowie gegebenenfalls die Komponenten (B), (C) und (E) werden üblicherweise ebenfalls in dem Extruder zusammen mit den Komponenten (A) und (D) compoundiert zur Herstellung des Masterbatches (M).

Die Summe der Gewichtsprozente der in dem Masterbatch (M) enthaltenen Komponenten (A) und (D) addieren sich üblicherweise zu 100 %. Es versteht sich von selbst, dass wenn der Masterbatch (M) weitere Komponenten sowie gegebenenfalls die Komponenten (B), (C) und/oder (E) enthält, die Summe der Gewichtsprozente der Komponenten (A) und (D) sowie der gegebenenfalls enthaltenen weiteren Komponenten und gegebenenfalls der Komponenten (B), (C) und (E) sich üblicherweise zu 100 % addieren.

Gegenstand der vorliegenden Erfindung ist außerdem der Masterbatch (M), erhältlich nach dem erfindungsgemäßen Verfahren.

Für den Masterbatch (M) erhältlich nach dem erfindungsgemäßen Verfahren gelten die zuvor beschriebenen Ausführungen und Bevorzugungen in Bezug auf das erfindungsgemäße Verfahren entsprechend.

Nachfolgend werden die in dem Masterbatch (M) enthaltenen Komponenten (A) und (D) sowie die gegebenenfalls enthaltenen Komponenten (B) und (C) näher erläutert.

Komponente (A): Lactam

Erfindungsgemäß ist die Komponente (A) mindestens ein Lactam.

In der vorliegenden Erfindung werden die Begriffe "Komponente (A)" und "mindestens ein Lactam" synonym gebraucht und haben daher die gleiche Bedeutung.

Unter "Lactam" werden erfindungsgemäß zyklische Amide verstanden, die im Ring 4 bis 12 Kohlenstoffatome, bevorzugt 6 bis 12 Kohlenstoffatome aufweisen.

Gegenstand der vorliegenden Erfindung ist somit auch ein Verfahren, bei dem die Komponente (A) mindestens ein Lactam mit 4 bis 12 Kohlenstoffatomen enthält.

Geeignete Lactame sind beispielsweise ausgewählt aus der Gruppe bestehend aus 4-Aminobutansäurelactam ($\gamma$-Lactam; $\gamma$-Butyrolactam; Pyrrolidon), 5-Aminopentansäurelactam ($\delta$-Lactam; $\delta$-Valerolactam; Piperidon), 6-Aminohexansäurelactam ($\varepsilon$-Lactam; $\varepsilon$-Caprolactam), 7-Aminoheptansäurelactam ($\zeta$-Lactam; $\zeta$-Heptanoiactam; Önanthlactam), 8-Aminooktansäurelactam ($\eta$-Lactam; $\eta$-Oktanolactam; Capryllactam), 9-Nonansäurelactam ($\theta$-Lactam; 8-Nonanolactam), 10-Dekansäurelactam ($\omega$-Dekanolactam; Caprinlactam), 11-Undekansäurelactam ($\omega$-Undekanolactam) und 12-Dodekansäurelactam ($\omega$-Dodekanolactam; Laurolactam).

Gegenstand der vorliegenden Erfindung ist somit auch ein Verfahren, bei dem die Komponente (A) ausgewählt ist aus der Gruppe bestehend aus Pyrrolidon, Piperidon, $\varepsilon$-Caprolactam, Önanthlactam, Capryllactam, Caprinlactam und Laurolactam.

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus $C_1$- bis $C_{10}$-Alkyl, $C_5$- bis $C_6$-Cycloalkyl und $C_5$- bis $C_{10}$-Aryl.

Bevorzugt ist die Komponente (A) unsubstituiert.

Als $C_r$ bis $C_{10}$-Alkylsubstituenten sind beispielsweise Methyl, Ethyl, Propyl, Isopropyl, n-Butyl, sec.-Butyl und tert.-Butyl geeignet. Ein geeigneter $C_5$- bis $C_6$-Cycloalkylsubstituent ist beispielsweise Cyclohexyl. Bevorzugte $C_5$- bis $C_{10}$-Arylsubstituenten sind Phenyl und Anthranyl.

Besonders bevorzugt werden unsubstituierte Lactame eingesetzt, wobei 12-Dodekansäurelactam ($\omega$-Dodekanolactam) und $\varepsilon$-Lactam ($\varepsilon$-Caprolactam) bevorzugt sind. Am meisten bevorzugt ist $\varepsilon$-Lactam ($\varepsilon$-Caprolactam).

$\varepsilon$-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel $C_6H_{11}NO$. Verfahren zur Herstellung von Caprolactam sind dem Fachmann bekannt.

Komponente (B): Katalysator

Erfindungsgemäß ist die Komponente (B) mindestens ein Katalysator.

In der vorliegenden Erfindung werden die Bezeichnungen "Komponente (B)" und "mindestens ein Katalysator" synonym gebraucht und haben daher die gleiche Bedeutung.

Der mindestens eine Katalysator ist bevorzugt ein Katalysator für die anionische Polymerisation eines Lactams. Daher ermöglicht der mindestens eine Katalysator bevorzugt die Bildung von Lactamanionen. Der mindestens eine Katalysator ist also in der Lage, Lactamate zu bilden, indem er das stickstoffgebundene Proton des mindestens einen Lactams (Komponente (A)) abspaltet.

Lactamanionen an sich können ebenfalls als der mindestens eine Katalysator fungieren. Der mindestens eine Katalysator kann auch als Initiator bezeichnet werden.

Geeignete Komponenten (B) sind dem Fachmann als solche bekannt und beispielsweise in "Polyamide. Kunststoff-Handbuch", Carl-Hanser-Verlag 1998, beschrieben.

Bevorzugt ist die Komponente (B) ausgewählt aus der Gruppe bestehend aus Alkalimetalllactamaten, Erdalkalimetalllactamaten, Alkalimetallen, Erdalkalimetallen, Alkalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

Gegenstand der vorliegenden Erfindung ist somit auch ein Verfahren, bei dem die Komponente (B) ausgewählt ist aus der Gruppe bestehend aus Alkalimetalllactamaten, Erdalkalimetalllactamaten, Alkalimetallen, Erdalkalimetallen, Akalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

Besonders bevorzugt ist die Komponente (B) ausgewählt aus Alkalimetalllactamaten und Erdalkalimetalllactamaten.

Alkalimetalllactamate sind dem Fachmann als solche bekannt. Geeignete Alkalimetalllactamate sind beispielsweise Natriumcaprolactamat sowie Kaliumcaprolactamat.

Geeignete Erdalkalimetalllactamate sind beispielsweise Bromid-Magnesiumcaprolactamat, Chlorid-Magnesiumcaprolactamat und Magnesium-biscaprolactamat. Geeignete Alkalimetalle sind beispielsweise Natrium und Kalium, geeignete Erdalkalimetalle sind beispielsweise Magnesium und Kalzium. Geeignete Alkalimetallhydride sind beispielsweise Natriumhydrid und Kaliumhydrid, geeignete Alkalimetallhydroxide sind beispielsweise Natriumhydroxid und Kaliumhydroxid. Geeignete Alkalimetallalkoholate sind beispielsweise Natriummethanolat, Natriumethanolat, Natriumpropanolat, Natriumbutanolat, Kaliummethanolat, Kaliumethanolat, Kaliumpropanolat und Kaliumbutanolat.

In einer weiteren insbesondere bevorzugten Ausführungsform ist die Komponente (B) ausgewählt aus der Gruppe bestehend aus Natriumhydrid, Natrium, Natriumcaprolactamat und einer Lösung von Natriumcaprolactamat in Caprolactam. Besonders bevorzugt ist Natriumcaprolactamat und/oder eine Lösung von Natriumcaprolactamat in Caprolactam (zum Beispiel Brüggolen C10, 17 bis 19 Gew.-% Natriumcaprolactamat und Caprolactam). Der mindestens eine Katalysator kann als Feststoff oder in Lösung eingesetzt werden. Bevorzugt wird der mindestens eine Katalysator als Feststoff eingesetzt. Der Katalysator wird insbesondere bevorzugt in eine Caprolactamschmelze gegeben, in der er gelöst werden kann.

Dem Fachmann ist klar, dass, wenn die Komponente (B) beispielsweise ein Alkalimetall ist, dieses bei Kontakt mit dem mindestens einen Lactam (Komponente (A)) reagiert und dabei ein Alkalimetalllactamat bildet.

Komponente (C): Aktivator

Erfindungsgemäß ist die Komponente (C) mindestens ein Aktivator.

Im Rahmen der vorliegenden Erfindung werden die Begriffe "Komponente (C)" und "mindestens ein Aktivator" synonym gebraucht und haben daher die gleiche Bedeutung.

Als der mindestens eine Aktivator eignet sich jeder dem Fachmann bekannte Aktivator, der dazu geeignet ist, die anionische Polymerisation des mindestens einen Lactams (Komponente (A)) zu aktivieren. Vorzugsweise ist der mindestens eine Aktivator ausgewählt aus der Gruppe bestehend aus N-substituierten Lactamen, Diisocyanaten, Polyisocyanaten, Allophanaten und Disäurehalogeniden, besonders bevorzugt ist der mindestens eine Aktivator ausgewählt aus der Gruppe bestehend aus N-substituierten Lactamen.

Gegenstand der vorliegenden Erfindung ist somit auch ein Verfahren, bei dem die Komponente (C) ausgewählt ist aus N-substituierten Lactamen, Diisocyanaten, Polyisocyanaten, Allophanaten und Disäurehalogeniden.

Bevorzugt sind die N-substituierten Lactame elektrophil N-substituiert. Als elektrophil N-substituierte Lactame eignen sich beispielsweise Acyllactame wie beispielsweise N-Acetylcaprolactam oder deren Vorstufen, welche zusammen mit dem mindestens einen Lactam (Komponente (A)) in situ ein aktiviertes Lactam bilden. Ein weiteres geeignetes N-substituiertes Lactam ist beispielsweise ein gecapptes Diisocyanat.

Als Diisocyanate können sowohl aliphatische Diisocyanate als auch aromatische Diisocyanate eingesetzt werden. Zu den aliphatischen Diisocyanaten zählen beispielsweise Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis (cyclohexylisocyanat) und Isophorondiisocyanat. Aromatische Diisocyanate sind beispielsweise Toluyldiisocyanat, 4,4'-Methylenbis(phenyl)isocyanat. Polyisocyanate sind zum Beispiel Isocyanate von Hexamethylendiisocyanat (Basonat HI 100/BASF SE). Geeignete Allophanate sind zum Beispiel Ethylallophanate.

Als Disäurehalogenide eignen sich sowohl aliphatische Disäurehalogenide als auch aromatische Disäurehalogenide. Als aliphatische Disäurehalogenide eignen sich Verbindungen wie Butylendisäurechlorid, Butylendisäurebromid, Hexamethylendisäurechlorid, Hexamethylendisäurebromid, Octamethylendisäure-chlorid, Octamethylendisäurebromid, Decamethylendi-säurechlorid, Decamethylendisäurebromid, Dodecame-thylendisäurechlorid, Dodecamethylendisäurebromid, 4,4'-Methylenbis(cyclohexylsäurechlorid), 4,4'-Methy-lenbis(cyclohexylsäurebromid), Isophorondisäurechlo-rid, Isophorondisäurebromid; als auch aromatische Di-säurehalogenide, wie Toluylmethylendisäurechlorid, To-luylmethylendisäurebromid, 4,4'-Methylenbis(phe-nyl)säurechlorid, 4,4'-Methylenbis(phenyl)säurebromid.

In einer bevorzugten Ausführungsform ist die Komponente (C) ausgewählt aus der Gruppe bestehend aus Hexamethylendiisocyanat, Isophorondiisocyanat, Hexamethylendisäurebromid, Hexamethylendisäurechlorid und deren Mischungen; besonders bevorzugt wird Hexamethylendiisocyanat eingesetzt.

Der mindestens eine Aktivator kann in Lösung eingesetzt werden. Insbesondere kann der mindestens eine Aktivator in Caprolactam gelöst werden.

Geeignet als mindestens ein Aktivator ist außerdem beispielsweise Brüggolen® C20, 80% Caprolactam-blockiertes 1,6-Hexamethylendiisocyanat in Caprolactam der Firma Brüggemann, DE.

Komponente (D): Fasermaterial

Erfindungsgemäß ist die Komponente (D) mindestens ein Fasermaterial.

Im Rahmen der vorliegenden Erfindung werden die Begriffe "Komponente (D)" und "mindestens ein Fasermaterial" synonym gebraucht und haben daher die gleiche Bedeutung.

Als das mindestens eine Fasermaterial eignen sich alle dem Fachmann bekannten Fasermaterialien. Bevorzugt ist die Komponente (D) ausgewählt aus der Gruppe aus anorganischen Fasermaterialien, organischen Fasermaterialien und Naturfasermaterialien.

Anorganische Fasermaterialien sind beispiels-weise Borfasermaterialien, Glasfasermaterialien, Koh-lenstofffasermaterialien, Kieselsäurefasermaterialien, Keramikfasermaterialien und Basaltfasermaterialien.

Organische Fasermaterialien sind beispielsweise Aramidfasermaterialien, Poly(p-phenylen-2,6-benzobisoxazol)-Fasermaterialien, Polyesterfasermate-rialien, Nylonfasermaterialien und Polyethylenfaserma-terialien.

Naturfasermaterialien sind beispielsweise Holzfasermaterialien, Flachsfasermaterialien, Hanffasermaterialien und Sisalfasermaterialien.

Bevorzugt ist die Komponente (D) ausgewählt aus der Gruppe bestehend aus Glasfasermaterialien, Kohlenstofffasermaterialien, Aramidfasermaterialien, Poly(p-phenylen-2,6-benzobisoxazol)-Fasermateriali-en, Borfasermaterialien, Metallfasermaterialien und Ka-liumtitanatfasermaterialien. Insbesondere bevorzugt ist die Komponente (D) ein Glasfasermaterial.

Gegenstand der vorliegenden Erfindung ist somit auch ein Verfahren, bei dem die Komponente (D) ausgewählt ist aus der Gruppe bestehend aus Glasfa-sermaterialien, Kohlenstofffasermaterialien, Aramidfa-sermaterialien, Poly(p-phenylen-2,6-benzobisoxa-zol)-Fasermaterialien, Borfasermaterialien, Metallfaser-materialien und Kaliumtitanatfasermaterialien.

Das mindestens eine Fasermaterial kann in allen dem Fachmann bekannten Formen eingesetzt werden. Beispielsweise kann das mindestens eine Fasermaterial als Flächengewebe, als einzelne Faser oder als Faserbündel eingesetzt werden.

Flächengewebe sind dem Fachmann bekannt. Als Flächengewebe werden beispielsweise Gewebe, Gestricke, Gelege, Gewirke und Vliese bezeichnet. Als Faserbündel werden beispielsweise Rovings, Schnittglasfasern und Prepregs bezeichnet. Bevorzugt ist die Komponente (D) ein Faserbündel.

Bevorzugte Faserbündel bestehen beispielsweise aus 100 bis 100 000 einzelnen Fasern, bevorzugt aus 1 000 bis 70 000 einzelnen Fasern und insbesondere bevorzugt aus 2 000 bis 50 000 einzelnen Fasern.

Die Faserbündel weisen beispielsweise eine Masse im Bereich von 50 bis 10 000 tex (1 tex = 1 g Faser pro 1 000 m) auf, bevorzugt im Bereich von 500 bis 8 000 tex und insbesondere bevorzugt im Bereich von 800 bis 6 000 tex.

Die Komponente (D) wird dem Extruder in dem erfindungsgemäßen Verfahren vorzugsweise in einer Form ausgewählt aus der Gruppe bestehend aus Rovings, Schnittglasfasern, gemahlenen Glasfasern und Prepregs zugeführt.

Gegenstand der vorliegenden Erfindung ist somit auch ein Verfahren, bei dem die Komponente (D) dem Extruder vor dem Compoundieren der Komponenten (A) und (D) in einer Form ausgewählt aus der Gruppe bestehend aus Rovings, Schnittglasfasern, gemahlenen Glasfasern und Prepregs zugeführt wird.

Besonders bevorzugt wird die Komponente (D) dem Extruder in dem erfindungsgemäßen Verfahren in einer Form ausgewählt aus der Gruppe bestehend aus Rovings, Schnittglasfasern und Prepregs zugeführt.

Gegenstand der vorliegenden Erfindung ist somit auch ein Verfahren, bei dem die Komponente (D) dem Extruder vor dem Compoundieren der Komponenten (A) und (D) in einer Form ausgewählt aus der Gruppe bestehend aus Rovings, Schnittglasfasern und Prepregs zugeführt wird.

In einer insbesondere bevorzugten Ausführungsform umfasst die Herstellung des Masterbatches (M) die folgenden Schritte:

a) Einbringen der Komponente (A) in den Extruder,

b) Zugabe der Komponente (D) in einer Form ausgewählt aus der Gruppe bestehend aus Rovings, Schnittglasfasern, gemahlenen Glasfasern und Prepregs, bevorzugt in einer Form ausgewählt aus der Gruppe bestehend aus Rovings, Schnittglasfasern und Prepregs, zu der Komponente (A) in dem Extruder, und

c) Compoundieren der Komponenten (A) und (D) in dem Extruder unter Erhalt des Masterbatches (M).

Gegenstand der vorliegenden Erfindung ist somit auch ein Verfahren, bei dem die Herstellung des Masterbatches (M) die folgenden Schritte umfasst:

a) Einbringen der Komponente (A) in den Extruder,

b) Zugabe der Komponente (D) in einer Form ausgewählt aus der Gruppe bestehend aus Rovings, Schnittglasfasern, gemahlenen Glasfasern und Prepregs zu der Komponente (A) in dem Extruder, und

c) Compoundieren der Komponenten (A) und (D) in dem Extruder unter Erhalt des Masterbatches (M).

In einer weiteren insbesondere bevorzugten Ausführungsform umfasst die Herstellung des Masterbatches (M) die folgenden Schritte:

a) Einbringen eines ersten Teils der Komponente (A) in den Extruder,

b) Zugabe der Komponente (D) in einer Form ausgewählt aus der Gruppe bestehend aus Rovings, Schnittglasfasern, gemahlenen Glasfasern und Prepregs, bevorzugt in einer Form ausgewählt aus der Gruppe bestehend aus Rovings, Schnittglasfasern und Prepregs, zu dem ersten Teil der Komponente (A) in dem Extruder,

c) Compoundieren des ersten Teils der Komponente (A) und der Komponente (D) in dem Extruder unter Erhalt einer ersten Mischung (M1), die den ersten Teil der Komponente (A) und die Komponente (D) enthält,

d) Zugabe eines zweiten Teils der Komponente (A) in den Extruder zu der ersten Mischung (M1) in dem Extruder und

e) compoundieren der ersten Mischung (M1) und des zweiten Teils der Komponente (A) in dem Extruder unter Erhalt des Masterbatches (M).

Für den ersten Teil der Komponente (A) und den zweiten Teil der Komponente (A) gelten die zuvor beschriebenen Ausführungen und Bevorzugungen für den ersten Teil der Komponente (A) und den zweiten Teil der Komponente (A) entsprechend.
In einer weiteren insbesondere bevorzugten Ausführungsform enthält der Masterbatch (M) zusätzlich eine Komponente (E), mindestens einen Verdicker. Die Herstellung des Masterbatches (M) umfasst dann bevorzugt die folgenden Schritte:

a) Einbringen eines ersten Teils der Komponente (A) und der Komponente (E), mindestens eines Verdickers, in den Extruder,

b) Zugabe der Komponente (D) in einer Form ausgewählt aus der Gruppe bestehend aus Rovings, Schnittglasfasern, gemahlenen Glasfasern und Prepregs, bevorzugt in einer Form ausgewählt aus der Gruppe bestehend aus Rovings, Schnittglasfasern und Prepregs, zu dem ersten Teil der Komponente (A) und der Komponente (E) in dem Extruder,

c) Compoundieren des ersten Teils der Komponente (A), der Komponente (E) und der Komponente (D) in dem Extruder unter Erhalt einer ersten Mischung (M1), die den ersten Teil der Komponente (A) sowie die Komponenten (E) und (D) enthält,

d) Zugabe eines zweiten Teils der Komponente (A) in den Extruder zu der ersten Mischung (M1) in dem Extruder und

e) compoundieren der ersten Mischung (M1) und des zweiten Teils der Komponente (A) in dem Extruder unter Erhalt des Masterbatches (M), der zusätzlich die Komponente (E) enthält.

Für den ersten Teil der Komponente (A) und den zweiten Teil der Komponente (A) gelten die zuvor beschriebenen Ausführungen und Bevorzugungen für den ersten Teil der Komponente (A) und den zweiten Teil der Komponente (A) entsprechend.
Während der Compoundierung der Komponenten (A) und (D) in dem Extruder wird die Komponente (D) üblicherweise zerkleinert. "Zerkleinern" bedeutet im Rahmen der vorliegenden Erfindung, dass die Komponente (D), insbesondere die als Komponente (D) bevorzugt eingesetzten Faserbündel, kürzer wird. Außerdem lösen sich die als Komponente (D) bevorzugt eingesetzten Faserbündel auf. Dies bedeutet, dass die Faserbündel geteilt werden und dann als einzelne Fasern vorliegen. Daher enthält der Masterbatch (M) als Komponente (D) bevorzugt einzelne Fasern. Insbesondere bevorzugt enthält der Masterbatch (M) die als Komponente (D) bevorzugt eingesetzten Faserbündel, die dem Extruder zugeführt werden, als einzelne Fasern.
Beispielsweise liegt die in dem Masterbatch (M) enthaltene Komponente (D) als einzelne Faser mit einer Länge im Bereich von 10 bis 1 000 $\mu$m vor, bevorzugt im Bereich von 20 bis 500 $\mu$m und insbesondere bevorzugt im Bereich von 30 bis 300 $\mu$m.
Gegenstand der vorliegenden Erfindung ist somit auch ein Verfahren, bei dem die Komponente (D) als einzelne Faser mit einer Länge im Bereich von 10 bis 1 000 $\mu$m vorliegt.

Ohne die Erfindung hierauf beschränken zu wollen, besteht die Vorstellung, dass die Komponente (D) insbesondere in den Knetzonen des Extruders zerkleinert wird.

Polymerisierbares Zweikomponentensystem (pS)

Das erfindungsgemäße polymerisierbare Zweikomponentensystem (pS) enthält getrennt voneinander

i) eine erste Systemkomponente (sK1), die den erfindungsgemäß hergestellten Masterbatch (M) und als zusätzliche Komponente entweder (B) - mindestens einen Katalysator, oder (C) - mindestens einen Aktivator, enthält und

ii) eine zweite Systemkomponente (sK2), die die Komponenten (A) - mindestens ein Lactam, und entweder (B) - mindestens einen Katalysator, oder (C) - mindestens einen Aktivator enthält,

wobei das polymerisierbare Zweikomponentensystem (pS) die Komponenten (B) und (C) enthält.

Gegenstand der vorliegenden Erfindung ist somit auch ein polymerisierbares Zweikomponentensystem (pS), das getrennt voneinander

i) eine erste Systemkomponente (sK1), die den erfindungsgemäß hergestellten Masterbatch (M) und als zusätzliche Komponente entweder

(B) mindestens einen Katalysator, oder
(C) mindestens einen Aktivator

enthält, und

ii) eine zweite Systemkomponente (sK2), die die Komponenten

(A) mindestens ein Lactam und
entweder
(B) mindestens einen Katalysator oder
(C) mindestens einen Aktivator

enthält,
umfasst, wobei das polymerisierbare Zweikomponentensystem (pS) die Komponenten (B) und (C) enthält.

Die erste Systemkomponente (sK1) kann außerdem zusätzlich die Komponente (A), mindestens ein Lactam, enthalten. Ebenso ist es möglich, dass die zweite Systemkomponente (sK2) zusätzlich den Masterbatch (M) enthält.
Gegenstand der vorliegenden Erfindung ist daher auch ein polymerisierbares Zweikomponentensystem (pS), das getrennt voneinander

i) eine erste Systemkomponente (sK1), die den erfindungsgemäß hergestellten Masterbatch (M), die Komponente (A) - mindestens ein Lactam, und als zusätzliche Komponente entweder

(B) mindestens einen Katalysator, oder
(C) mindestens einen Aktivator

enthält, und

ii) eine zweite Systemkomponente (sK2), die die Komponenten

(A) mindestens ein Lactam und
entweder
(B) mindestens einen Katalysator oder
(C) mindestens einen Aktivator

enthält,
umfasst, wobei das polymerisierbare Zweikomponentensystem (pS) die Komponenten (B) und (C) enthält.

Gegenstand der vorliegenden Erfindung ist darüber hinaus ein polymerisierbares Zweikomponentensystem (pS), das getrennt voneinander

i) eine erste Systemkomponente (sK1), die den erfindungsgemäß hergestellten Masterbatch (M) und als zusätzliche Komponente entweder

(B) mindestens einen Katalysator, oder
(C) mindestens einen Aktivator

enthält, und

ii) eine zweite Systemkomponente (sK2), die den Masterbatch (M) und die Komponenten

(A) mindestens ein Lactam und
entweder
(B) mindestens einen Katalysator oder
(C) mindestens einen Aktivator

enthält,
umfasst, wobei das polymerisierbare Zweikomponentensystem (pS) die Komponenten (B) und (C) enthält.

Gegenstand der vorliegenden Erfindung ist darüber hinaus ein polymerisierbares Zweikomponentensystem (pS), das getrennt voneinander

i) eine erste Systemkomponente (sK1), die den erfindungsgemäß hergestellten Masterbatch (M), die Komponente (A) - mindestens ein Lactam, und als zusätzliche Komponente entweder

(B) mindestens einen Katalysator, oder

(C) mindestens einen Aktivator

enthält, und

ii) eine zweite Systemkomponente (sK2), die den Masterbatch (M) und die Komponenten

(A) mindestens ein Lactam und
entweder
(B) mindestens einen Katalysator oder
(C) mindestens einen Aktivator

enthält,
umfasst, wobei das polymerisierbare Zweikomponentensystem (pS) die Komponenten (B) und (C) enthält.

In einer weiteren Ausführungsform enthält die zweite Systemkomponete (sK2) den Masterbatch (M) und entweder die Komponente (B) oder die Komponente (C). In dieser Ausführungsform ist es möglich, dass die zweite Systemkomponente (sK2) keine Komponente (A) enthält.

Gegenstand der vorliegenden Erfindung ist daher außerdem ein polymerisierbares Zweikomponentensystem (pS), das getrennt voneinander

i) eine erste Systemkomponente (sK1), die den erfindungsgemäß hergestellten Masterbatch (M) und als zusätzliche Komponente entweder

(B) mindestens einen Katalysator, oder
(C) mindestens einen Aktivator

enthält, und

ii) eine zweite Systemkomponente (sK2), die den erfindungsgemäß hergestellten Masterbatch (M) und als zusätzliche Komponente
entweder

(B) mindestens einen Katalysator oder
(C) mindestens einen Aktivator

enthält,
umfasst, wobei das polymerisierbare Zweikomponentensystem (pS) die Komponenten (B) und (C) enthält.

Für die in der ersten Systemkomponente (sK1) und in der zweiten Systemkomponente (sK2) gegebenenfalls enthaltenen Komponenten (A), (B) und (C) gelten die zuvor beschriebenen Ausführungen und Bevorzugungen für die Komponenten (A), (B) und (C) entsprechend.

Unter "getrennt voneinander" wird im Rahmen der vorliegenden Erfindung verstanden, dass die erste Systemkomponente (sK1) und die zweite Systemkomponente (sK2) räumlich voneinander getrennt vorliegen. Dies bedeutet, dass die erste Systemkomponente (sK1) und die zweite Systemkomponente (sK2) beispielsweise in zwei separaten Behältern vorliegen können. Ebenso ist es möglich, dass die erste Systemkomponente (sK1) und die zweite Systemkomponente (sK2) gemeinsam in demselben Behälter vorliegen, allerdings räumlich beispielsweise durch eine Wand voneinander getrennt sind.

Das polymerisierbare Zweikomponentensystem (pS) enthält beispielsweise im Bereich von 1 bis 99 Gew.-% der ersten Systemkomponente (sK1) und im Bereich von 1 bis 99 Gew.-% der zweiten Systemkomponente (sK2), bezogen auf das Gesamtgewicht der polymerisierbaren Zweikomponentensystems (pS).

Bevorzugt enthält das polymerisierbare Zweikomponentensystem (pS) im Bereich von 4 bis 98 Gew.-% der ersten Systemkomponente (sK1) und im Bereich von 2 bis 96 Gew.-% der zweiten Systemkomponente (sK2), jeweils bezogen auf das Gesamtgewicht des polymerisierbaren Zweikomponentensystems (pS).

Insbesondere bevorzugt enthält das polymerisierbare Zweikomponentensystem (pS) im Bereich von 45 bis 55 Gew.-% der ersten Systemkomponente (sK1) und im Bereich von 45 bis 55 Gew.-% der zweiten Systemkomponente (sK2), jeweils bezogen auf das Gesamtgewicht des polymerisierbaren Zweikomponentensystems (pS).

Erfindungsgemäß enthält die erste Systemkomponente (sK1) den erfindungsgemäß hergestellten Masterbatch (M) und als zusätzliche Komponente entweder (B) - mindestens einen Katalysator, oder (C) - mindestens einen Aktivator.

Dabei ist es erfindungsgemäß bevorzugt, dass der Masterbatch (M) keine Komponente (B) - mindestens einen Katalysator - und keine Komponente (C) - mindestens einen Aktivator, enthält. Insbesondere ist es bevorzugt, dass der Masterbatch (M) in dieser Ausführungsform aus der Komponente (A), der Komponente (D) sowie gegebenenfalls der Komponente (E) besteht.

Die erste Systemkomponente (sK1) enthält als zusätzliche Komponente entweder (B) - mindestens einen Katalysator, oder (C) - mindestens einen Aktivator. Dies bedeutet, dass die erste Systemkomponente (sK1) in einer Ausführungsform der vorliegenden Erfindung die Komponente (B) enthält und keine Komponente (C) enthält.

In einer weiteren Ausführungsform bedeutet dies, dass die erste Systemkomponente (sK1) die Komponente (C) enthält und keine Komponente (B) enthält.

Die erste Systemkomponente (sK1) kann den Masterbatch (M) und entweder die zusätzliche Komponente (B) oder die zusätzliche Komponente (C) sowie gegebenenfalls die Komponente (A) in beliebigen Mengen enthalten.

Die zweite Systemkomponente (sK2) enthält die Komponenten (A) und entweder (B) oder (C). Dies bedeutet, dass die zweite Systemkomponente (sK2) beispielsweise die Komponente (A) und die Komponente (B) enthält und keine Komponente (C).

In einer weiteren Ausführungsform enthält die zweite Systemkomponente (sK2) die Komponente (A) und die Komponente (C) und keine Komponente (B).

In einer Ausführungsform besteht die zweite Systemkomponente (sK2) daher aus der Komponente (A) und der Komponente (B).

In einer weiteren Ausführungsform besteht die zweite Systemkomponente (sK2) aus der Komponente (A) und der Komponente (C).

Die zweite Systemkomponente (sK2) kann die Komponente (A) und entweder die Komponente (B) oder die Komponente (C) sowie gegebenenfalls den Masterbatch (M) in beliebigen Mengen enthalten.

Bevorzugt enthalten die erste Systemkomponente (sK1) und die zweite Systemkomponente (sK2) die Komponenten (A), (B), (C) sowie den Masterbatch (M) in solchen Mengen, dass die nach Vermischen der ersten Systemkomponente (sK1) und der zweiten Systemkomponente (sK2) in einer bevorzugten Ausführungsform der Erfindung erhaltene polymerisierbare Mischung (pM) die weiter unten beschriebene Zusammensetzung aufweist.

Es versteht sich von selbst, dass wenn die erste Systemkomponente (sK1) die Komponente (B) enthält, die zweite Systemkomponente (sK2) die Komponente (C) enthält.

Enthält hingegeben die erste Systemkomponente (sK1) die Komponente (C), dann enthält die zweite Systemkomponente (sK2) die Komponente (B).

Polyamid (P)

Das erfindungsgemäße polymerisierbare Zweikomponentensystem (pS) kann zur Herstellung eines Polyamids (P) verwendet werden.

Das Polyamid (P) kann nach allen dem Fachmann bekannten Methoden hergestellt werden, ausgehend von dem polymerisierbaren Zweikomponentensystem (pS).

Vorzugsweise umfasst das Verfahren zur Herstellung des Polyamids (P) mit dem polymerisierbaren Zweikomponentensystem (pS) die folgenden Schritte:

a) Bereitstellung des erfindungsgemäßen polymerisierbaren Zweikomponentensystems (pS),

b) Mischen der erste Systemkomponente (sK1) des polymerisierbaren Zweikomponentensystems (pS) und der zweiten Systemkomponente (sK2) des polymerisierbaren Zweikomponentensystems (pS) unter Erhalt einer polymerisierbaren Mischung (pM),

c) Polymerisation der in Schritt b) erhaltenen polymerisierbaren Mischung (pM) unter Erhalt des Polyamids (P).

Gegenstand der vorliegenden Erfindung ist somit auch ein Verfahren umfassend die Schritte

a) Bereitstellung eines erfindungsgemäßen polymerisierbaren Zweikomponentensystems (pS),

b) Mischen der ersten Systemkomponente (sK1) und der zweiten Systemkomponente (sK2) unter Erhalt einer polymerisierbaren Mischung (pM),

c) Polymerisation der in Schritt b) erhaltenen polymerisierbaren Mischung (pM) unter Erhalt des Polyamids (P).

Die Bereitstellung des polymerisierbaren Zweikomponentensystems (pS) in Schritt a) kann nach allem dem Fachmann bekannten Methoden durchgeführt werden.

Zum Mischen der ersten Systemkomponente (sK1) und der zweiten Systemkomponente (sK2) in Schritt b) eignen sich alle dem Fachmann bekannten Methoden. Beispielsweise können die erste Systemkomponente (sK1) und die zweite Systemkomponente (sK2) gemischt werden, während sie in eine Form injiziert werden.

Die erste Systemkomponente (sK1) und die zweite Systemkomponente (sK2) können direkt in der Form gemischt werden unter Erhalt der polymerisierbaren Mischung (pM). Ebenso ist es möglich und erfindungsgemäß bevorzugt, dass die erste Systemkomponente (sK1) und die zweite Systemkomponente (sK2) in einer geeigneten Mischvorrichtung gemischt werden unter Erhalt der polymerisierbaren Mischung (pM), die dann nachfolgend in eine Form eingebracht wird. Bevorzugt wird die polymerisierbare Mischung (pM) hergestellt und nachfolgend in eine Form eingebracht. Derartige Mischvorrichtungen sind dem Fachmann als solche bekannt und beispielsweise statische und/oder dynamische Mischer.

Die in Schritt b) erhaltene polymerisierbare Mischung (pM) enthält also den Masterbatch (M) sowie die Komponente (B) und die Komponente (C). Anders ausgedrückt enthält die polymerisierbare Mischung (pM) die Komponenten (A) - mindestens ein Lactam, (B) - mindestens einen Katalysator, (C) - mindestens einen Aktivator, und (D) - mindestens ein Fasermaterial.

Beispielsweise enthält die polymerisierbare Mischung (pM) im Bereich von 28,5 bis 90 Gew.-% der Komponente (A), im Bereich von 1 bis 20 Gew.-% der Komponente (B), im Bereich von 0,5 bis 10 Gew.-% der Komponente (C) und im Bereich von 8,5 bis 70 Gew.-% der Komponente (D), jeweils bezogen auf die Summe der Gewichtsprozente der Komponenten (A), (B), (C) und (D), bevorzugt bezogen auf das Gesamtgewicht der polymerisierbaren Mischung (pM).

Bevorzugt enthält die polymerisierbare Mischung (pM) im Bereich von 37 bis 80 Gew.-% der Komponente (A), im Bereich von 2 bis 10 Gew.-% der Komponente (B), im Bereich von 1 bis 5 Gew.-% der Komponente (C) und im Bereich von 17 bis 60 Gew.-% der Komponente (D), jeweils bezogen auf die Summe der Gewichtsprozente der Komponenten (A), (B), (C) und (D), bevorzugt bezogen auf das Gesamtgewicht der polymerisierbaren Mischung (pM).

Insbesondere bevorzugt enthält die polymerisierbare Mischung (pM) im Bereich von 45,5 bis 70 Gew.-% der Komponente (A), im Bereich von 3 bis 6 Gew.-% der Komponente (B), im Bereich von 1,5 bis 3 Gew.-% der Komponente (C) und im Bereich von 25,5 bis 50 Gew.-% der Komponente (D), jeweils bezogen auf die Summe der Gewichtsprozente der Komponenten (A), (B), (C) und (D), bevorzugt bezogen auf das Gesamtgewicht der polymerisierbaren Mischung (pM).

Die polymerisierbare Mischung (pM) enthält die Komponente (D) dispergiert in den Komponenten (A), (B), (C) sowie gegebenenfalls (E). Die Komponente (D) wird daher auch als "disperse Phase" bezeichnet, die Komponenten (A), (B), (C) sowie gegebenenfalls (E) werden auch als "kontinuierliche Phase" bezeichnet.

Die kontinuierliche Phase, also die in der polymerisierbaren Mischung (pM) enthaltenen Komponenten (A), (B), (C) sowie gegebenenfalls (E), ohne die Komponente (D), weist beispielsweise eine Viskosität im Bereich von 2 bis 1 000 mPas auf, bevorzugt im Bereich von 5 bis 500 mPas und insbesondere bevorzugt im Bereich von 10 bis 300 mPas, gemessen mit einem schubspannungskontrollierten Rotationsviskosimeter bei einer Scherrate von 100 s$^{-1}$ und einer Temperatur von 100 °C.

Die Polymerisation der polymerisierbaren Mischung (pM) in Schritt c) wird üblicherweise gestartet, indem die polymerisierbare Mischung (pM) auf eine Temperatur oberhalb der Schmelztemperatur des mindestens einen Lactams erwärmt wird. Bevorzugt wird die polymerisierbare Mischung (pM) auf eine Temperatur erwärmt die unterhalb der Schmelztemperatur des Polyamids (P) liegt.

Es versteht sich von selbst, dass die Schmelztemperatur des mindestens einen Lactams unterhalb der Schmelztemperatur des Polyamids (P) liegt.

Beispielsweise wird die polymerisierbare Mischung (pM) zur Polymerisation in Schritt c) auf eine Temperatur im Bereich von 130 bis 180 °C, bevorzugt im Bereich von 135 bis 170 °C und insbesondere bevorzugt im Bereich von 140 bis 160 °C erwärmt.

Dabei polymerisiert das in der polymerisierbaren Mischung (pM) enthaltene mindestens eine Lactam und das Polyamid (P) wird erhalten.

Gegenstand der vorliegenden Erfindung ist somit auch ein Polyamid (P) erhältlich nach dem beschriebenen Verfahren zur Herstellung eines Polyamids (P).

Zur Polymerisation kann die polymerisierbare Mischung (pM) beispielsweise in eine Form eingebracht werden. Dann wird bei der Polymerisation der polymerisierbaren Mischung (pM) ein Formkörper aus dem Polyamid (P) erhalten.

Gegenstand der vorliegenden Erfindung ist somit auch ein Formkörper aus dem erfindungsgemäßen Polyamid (P).

Gegenstand der vorliegenden Erfindung ist weiterhin die Verwendung des erfindungsgemäß hergestellten Masterbatches (M) zur Herstellung des Polyamids (P).

Nachfolgend wird die Erfindung durch Beispiele näher erläutert ohne sie hierauf zu beschränken.

Vergleichsbeispiel 1

Es wurde ein Extruder mit drei Abschnitten eingesetzt. Der erste Abschnitt (I) umfasste eine Zone, deren Temperatur bei 35 °C lag, der zweite Abschnitt (II) umfasste 4 Zonen mit folgenden Temperaturen: 170 °C, 170 °C, 130 °C und 90 °C. Der dritte Abschnitt (III) umfasste 8 Zonen mit folgenden Temperaturen: 70 °C, 60 °C, 50 °C, 50°C, 40 °C, 40 °C, 40 °C und 40 °C. Die Temperaturen beziehen sich jeweils auf die Manteltemperaturen des Extruders.

Es wurden 200 g Verdicker (Styroflex, 2G66 der Firma Styrolution) mit 5 000g Caprolactam vermischt. Diese Mischung wurde in die erste Zone des ersten Abschnitts (I) (35 °C) in den Extruder eingebracht. In der zweiten Zone (erste Zone des zweiten Abschnitts (II)) wurde mit einer Geschwindigkeit von 1,5 kg/h 1 kg Glasfaser zudosiert. In der sechsten Zone (erste Zone des dritten Abschnitts (III), 70 °C) wurden 1,5 kg Caprolactam pro Stunde zugegeben. Das bei der Extrusion enthaltene Produkt war inhomogen und verklumpt.

Beispiel 2

Es wurde ein Extruder mit drei Abschnitten eingesetzt. Der erste Abschnitt (I) umfasste eine Zone, deren Temperatur bei 35 °C lag, der zweite Abschnitt (II) umfasste 4 Zonen mit folgenden Temperaturen: 170 °C, 170 °C, 150 °C und 120 °C. Der dritte Abschnitt (III) umfasste 8 Zonen mit folgenden Temperaturen: 100 °C, 80 °C, 60 °C, 50°C, 40 °C, 40 °C, 40 °C, 40 °C. Die Temperaturen beziehen sich jeweils auf die Manteltemperaturen des Extruders.

Es wurden 200 g Verdicker (Styroflex, 2G66 der Firma Styrolution) mit 5 000 g Caprolactam vermischt. Diese Mischung wurde in die erste Zone des ersten Abschnitts (I) (35 °C) in den Extruder eingebracht. In der zweiten Zone (erste Zone des zweiten Abschnitts (II), 170 °C) wurde mit einer Geschwindigkeit von 1,5 kg/h 1 kg Glasfaser zudosiert. In der sechsten Zone (erste Zone des dritten Abschnitts (III), 70°C) wurden 1,5 kg Caprolactam pro Stunde zugegeben. Das bei der Extrusion enthaltene Produkt war homogen und wies keine Verklumpungen auf.

Es ist zu erkennen, dass die Qualität des Produkts von der Manteltemperatur des Extruders abhängt und dass die Manteltemperatur insbesondere die Homogenität des Produkts beeinflusst.

**Patentansprüche**

1. Verfahren zur Herstellung eines Masterbatches (M), der die Komponenten

    (A) mindestens ein Lactam und
    (D) mindestens ein Fasermaterial

enthält, **dadurch gekennzeichnet, dass** die Komponenten (A) und (D) in einem Extruder mit einer Scherrate von mindestens 500 s$^{-1}$ compoundiert werden, und dass der Extruder mindestens die folgenden Abschnitte umfasst

    (I) einen ersten Abschnitt,
    (II) einen zweiten Abschnitt und
    (III) einen dritten Abschnitt,

wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

2. Verfahren gemäß Anspruch 1, **dadurch gekennzeichnet, dass** der Extruder im ersten Abschnitt (I) eine erste Temperatur (T1), die im Bereich von 20 bis 70 °C liegt, aufweist und/oder der Extruder im dritten Abschnitt (III) eine dritte Temperatur (T3), die im Bereich von 20 bis < 105 °C liegt, aufweist.

3. Verfahren gemäß Anspruch 1 oder 2, **dadurch gekennzeichnet, dass** der zweite Abschnitt (II) des Extruders 2 bis 10 Knetzonen und 1 bis 10 Förderzonen umfasst und/oder der dritte Abschnitt (III) des Extruders 1 bis 5 Mischzonen, 1 bis 5 Knetzonen, 2 bis 10 Förderzonen und 1 bis 5 Stauzonen umfasst.

4. Verfahren gemäß einem der Ansprüche 1 bis 3, **dadurch gekennzeichnet, dass** der Masterbatch (M) im Bereich von 1 bis 90 Gew.-% der Komponente (D) enthält, bezogen auf das Gesamtgewicht des Masterbatches (M).

5. Verfahren gemäß einem der Ansprüche 1 bis 4, **dadurch gekennzeichnet, dass** die Komponente (D) ausgewählt ist aus der Gruppe bestehend aus Glasfasermaterialien, Kohlenstofffasermaterialien, Aramidfasermaterialien, Poly(p-phenylen-2,6-benzobisoxazol)-Fasermaterialien, Borfasermaterialien, Metallfasermaterialien und Kaliumtitanatfasermaterialien.

6. Verfahren gemäß einem der Ansprüche 1 bis 5, **dadurch gekennzeichnet, dass** die Komponente (D) als einzelne Faser mit einer Länge im Bereich von 10 bis 1000 $\mu$m vorliegt.

7. Verfahren gemäß einem der Ansprüche 1 bis 6, **dadurch gekennzeichnet, dass** der Masterbatch (M) zusätzlich eine Komponente (E), mindestens einen Verdicker, enthält, wobei die Komponente (E) ausgewählt ist aus der Gruppe bestehend aus thermoplastischen Polystyrolen, Polysulfonen, Polyphenylethern, Polybutadienen, Polyisoprenen und Nanofüllstoffen.

8. Verfahren gemäß einem der Ansprüche 1 bis 7, **dadurch gekennzeichnet, dass** die Herstellung des Masterbatches (M) die folgenden Schritte umfasst:

    a) Einbringen der Komponente (A) in den Extruder,
    b) Zugabe der Komponente (D) in einer Form ausgewählt aus der Gruppe bestehend aus Rovings, Schnittglasfasern, gemahlenen Glasfasern und Prepregs zu der Komponente (A) in dem Extruder, und
    c) Compoundieren der Komponenten (A) und (D) in dem Extruder unter Erhalt des Masterbatches (M).

9. Masterbatch (M), erhältlich nach einem Verfahren gemäß einem der Ansprüche 1 bis 8.

10. Polymerisierbares Zweikomponentensystem (pS), das getrennt voneinander

    i) eine erste Systemkomponente (sK1), die den Masterbatch (M) gemäß Anspruch 9 und als zusätzliche Komponente entweder

        (B) mindestens einen Katalysator, oder
        (C) mindestens einen Aktivator

    enthält, und
    ii) eine zweite Systemkomponente (sK2), die die Komponenten

        (A) mindestens ein Lactam und
        entweder
        (B) mindestens einen Katalysator oder
        (C) mindestens einen Aktivator

    enthält,
    umfasst, wobei das polymerisierbare Zweikomponentensystem (pS) die Komponenten (B) und (C) enthält.

11. Verfahren zur Herstellung eines Polyamids (P), umfassend die Schritte

    a) Bereitstellung eines polymerisierbaren Zweikomponentensystems (pS) gemäß Anspruch 10,
    b) Mischen der ersten Systemkomponente (sK1) und der zweiten Systemkomponente (sK2) unter Erhalt einer polymerisierbaren Mischung (pM),
c) Polymerisation der in Schritt b) erhaltenen polymerisierbaren Mischung (pM) unter Erhalt des Polyamids (P).

12. Verwendung des Masterbatches (M) gemäß Anspruch 9 zur Herstellung eines Polyamids (P).

13. Polyamid (P), erhältlich nach einem Verfahren gemäß Anspruch 11.

14. Formkörper aus dem Polyamid (P) gemäß Anspruch 13.

**Claims**

1. A process for the production of a masterbatch (M) which comprises the following components:

   (A) at least one lactam and
   (D) at least one fiber material,

   which comprises compounding components (A) and (D) in an extruder with shear rate at least 500 s$^{-1}$, and wherein the extruder comprises at least the following sections:

   (I) a first section,
   (II) a second section, and
   (III) a third section,

   where a first temperature (T1) prevails in the first section (I) of the extruder, a second temperature (T2) prevails in the second section (II), and a third temperature (T3) prevails in the third section (III), where the second temperature (T2) is in the range from 105 to 220°C.

2. The process according to claim 1, wherein a first temperature (T1) in the range from 20 to 70°C prevails in the first section (I) of the extruder and/or a third temperature (T3) in the range from 20 to < 105°C prevails in the third section (III) of the extruder.

3. The process according to claim 1 or 2, wherein the second section (II) of the extruder comprises from 2 to 10 kneading zones and from 1 to 10 conveying zones and/or the third section (III) of the extruder comprises from 1 to 5 mixing zones, from 1 to 5 kneading zones, from 2 to 10 conveying zones, and from 1 to 5 flow-restricting zones.

4. The process according to any of claims 1 to 3, wherein the masterbatch (M) comprises from 1 to 90% by weight of component (D), based on the total weight of the masterbatch (M).

5. The process according to any of claims 1 to 4, wherein component (D) is selected from the group consisting of glassfiber materials, carbon fiber materials, aramid fiber materials, poly(p-phenylene-2,6-benzobisoxazole) fiber materials, boron fiber materials, metal fiber materials, and potassium titanate fiber materials.

6. The process according to any of claims 1 to 5, wherein component (D) takes the form of individual fiber of length in the range from 10 to 1000 $\mu$m.

7. The process according to any of claims 1 to 6, wherein the masterbatch (M) also comprises component (E), at least one thickener, where component (E) is selected from the group consisting of thermoplastic polystyrenes, polysulfones, polyphenyl ethers, polybutadienes, polyisoprenes, and nanofillers.

8. The process according to any of claims 1 to 7, wherein the production of the masterbatch (M) comprises the following steps:

   a) introduction of component (A) into the extruder,
   b) addition of component (D) in a form selected from the group consisting of rovings, chopped glass fibers, ground glass fibers, and prepregs to component (A) in the extruder, and
   c) compounding of components (A) and (D) in the extruder to give the masterbatch (M).

9. A masterbatch (M) obtainable by a process according to any of claims 1 to 8.

10. A polymerizable two-component system (pS) which comprises, separately from one another,

    i) a first system component (sK1) which comprises the masterbatch (M) in accordance with claim 9 and, as additional component, either

    (B) at least one catalyst or
    (C) at least one activator,

    and
    ii) a second system component (sK2) which comprises the following components:

    (A) at least one lactam and
    either
    (B) at least one catalyst or
    (C) at least one activator,

    where the polymerizable two-component system (pS) comprises components (B) and (C).

**11.** A process for the production of a polyamide (P), comprising the following steps:

> a) provision of a polymerizable two-component system (pS) according to claim 10,
> b) mixing of the first system component (sK1) and of the second system component (sK2) to give a polymerizable mixture (pM),
> c) polymerization of the polymerizable mixture (pM) obtained in step b) to give the polyamide (P).

**12.** The use of the masterbatch (M) according to claim 9 for the production of a polyamide (P).

**13.** A polyamide (P) obtainable by a process according to claim 11.

**14.** A molding made of the polyamide (P) according to claim 13.

## Revendications

**1.** Procédé de fabrication d'un mélange maître (M), qui contient les composants suivants :

> (A) au moins un lactame et
> (D) au moins un matériau fibreux,

> **caractérisé en ce que** les composants (A) et (D) sont combinés dans une extrudeuse avec un taux de cisaillement d'au moins 500 s$^{-1}$, et **en ce que** l'extrudeuse comprend au moins les sections suivantes :

> (I) une première section,
> (II) une deuxième section et
> (III) une troisième section,

> l'extrudeuse présentant une première température (T1) dans la première section (I), une deuxième température (T2) dans la deuxième section (II) et une troisième température (T3) dans la troisième section (III), la deuxième température (T2) se situant dans la plage allant de 105 à 220 °C.

**2.** Procédé selon la revendication 1, **caractérisé en ce que** l'extrudeuse présente dans la première section (I) une première température (T1), qui se situe dans la plage allant de 20 à 70 °C, et/ou l'extrudeuse présente dans la troisième section (III) une troisième température (T3), qui se situe dans la plage allant de 20 à < 105 °C.

**3.** Procédé selon la revendication 1 ou 2, **caractérisé en ce que** la deuxième section (II) de l'extrudeuse comprend 2 à 10 zones de malaxage et 1 à 10 zones de transport, et/ou la troisième section (III) de l'extrudeuse comprend 1 à 5 zones de mélange, 1 à 5 zones de malaxage, 2 à 10 zones de transport et 1 à 5 zones d'accumulation.

**4.** Procédé selon l'une quelconque des revendications 1 à 3, **caractérisé en ce que** le mélange maître (M) contient dans la plage allant de 1 à 90 % en poids du composant (D), par rapport au poids total du mélange maître (M).

**5.** Procédé selon l'une quelconque des revendications 1 à 4, **caractérisé en ce que** le composant (D) est choisi dans le groupe constitué par les matériaux à base de fibres de verre, les matériaux à base de fibres de carbone, les matériaux à base de fibres d'aramide, les matériaux à base de fibres de poly(p-phénylène-2,6-benzobisoxazole), les matériaux à base de fibres de bore, les matériaux à base de fibres métalliques et les matériaux à base de fibres de titanate de potassium.

**6.** Procédé selon l'une quelconque des revendications 1 à 5, **caractérisé en ce que** le composant (D) se présente en tant que fibres individuelles avec une longueur dans la plage allant de 10 à 1 000 $\mu$m.

**7.** Procédé selon l'une quelconque des revendications 1 à 6, **caractérisé en ce que** le mélange maître (M) contient en outre un composant (E), au moins un épaississant, le composant (E) étant choisi dans le groupe constitué par les polystyrènes thermoplastiques, les polysulfones, les polyphényléthers, les polybutadiènes, les polyisoprènes et les nanocharges.

**8.** Procédé selon l'une quelconque des revendications 1 à 7, **caractérisé en ce que** la fabrication du mélange maître (M) comprend les étapes suivantes :

> a) l'introduction du composant (A) dans l'extrudeuse,
> b) l'ajout du composant (D) sous une forme choisie dans le groupe constitué par les stratifils, les fibres de verre découpées, les fibres de verre broyées et les préimprégnés au composant (A) dans l'extrudeuse, et
> c) la combinaison des composants (A) et (D) dans l'extrudeuse pour obtenir le mélange maître (M).

**9.** Mélange maître (M), pouvant être obtenu par un procédé selon l'une quelconque des revendications 1 à 8.

**10.** Système bicomposant polymérisable (pS), qui comprend séparément l'un de l'autre :

> i) un premier composant de système (sK1), qui contient le mélange maître (M) selon la revendication 9 et, en tant que composant supplémentaire, soit

    (B) au moins un catalyseur, soit
    (C) au moins un activateur,

et

ii) un deuxième composant de système (sK2), qui contient les composants :

    (A) au moins un lactame et
    soit
    (B) au moins un catalyseur, soit
    (C) au moins un activateur,

le système bicomposant polymérisable (pS) contenant les composants (B) et (C).

**11.** Procédé de fabrication d'un polyamide (P), comprenant les étapes suivantes :

    a) la préparation d'un système bicomposant polymérisable (pS) selon la revendication 10,
    b) le mélange du premier composant de système (sK1) et du deuxième composant de système (sK2) pour obtenir un mélange polymérisable (pM),
    c) la polymérisation du mélange polymérisable (pM) obtenu à l'étape b) pour obtenir le polyamide (P).

**12.** Utilisation du mélange maître (M) selon la revendication 9 pour la fabrication d'un polyamide (P).

**13.** Polyamide (P), pouvant être obtenu par un procédé selon la revendication 11.

**14.** Corps moulé à partir du polyamide (P) selon la revendication 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014086757 A
- EP 2789641 A
- US 20100286343 A
- EP 0459199 A

**In der Beschreibung aufgeführte Nicht-Patentliteratur**

- Polyamide. Kunststoff-Handbuch. Carl-Hanser-Verlag, 1998